Europäisches Patentamt

European Patent Office

Office européen des brevets

(11) Publication number: **0 144 018**
**A2**

## (12) EUROPEAN PATENT APPLICATION

(21) Application number: **84113710.2**

(22) Date of filing: **14.11.84**

(51) Int. Cl.⁴: **G 01 N 21/05**

(30) Priority: **01.12.83 IT 2371283 U**

(43) Date of publication of application:
**12.06.85 Bulletin 85/24**

(84) Designated Contracting States:
**CH DE FR GB LI NL SE**

(71) Applicant: **ILLYCAFE' S.p.A.**
**110, Via Flavia**
**I-34147 Trieste(IT)**

(72) Inventor: **Illy, Ernesto**
**110, Via Flavia**
**I-34147 Trieste(IT)**

(74) Representative: **Ferraiolo, Ruggero**
**Viale Tunisia, 29**
**I-20124 Milano(IT)**

(54) Observation chamber for a powdered material.

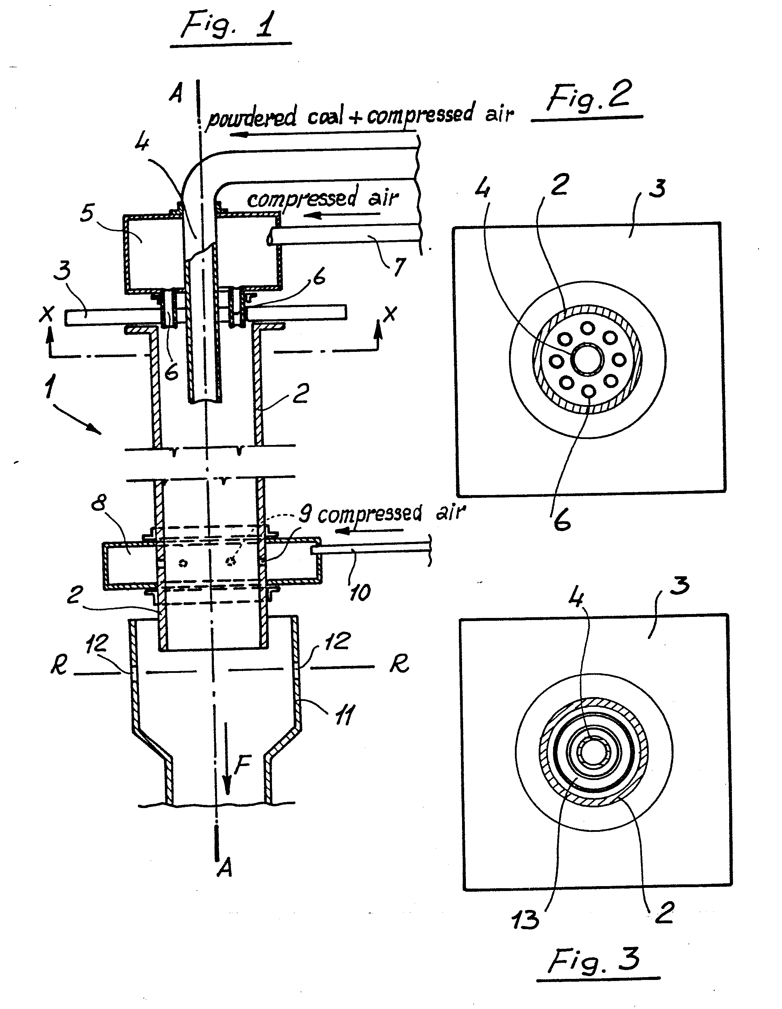

(57) Observation chamber (1) comprising a cylindrical chamber (2) for containing and guiding a flow of powdered material put in for analysis, a tube (4) that passes rectilinearly through the top wall of the cylindrical chamber (2) extending into said chamber (2) parallel to its longitudinal axis (A-A) and carrying into it a flow of powdered material conveyed by compressed gas, a number of compressed gas ejectors (6) placed around the above tube (4) and having outlets into the cylindrical chamber (2) set back in relation to the outlet of the tube inside the cylindrical chamber (2) in such a way that the compressed gas carried by the ejectors (6) enters upstream of the entry point of the material brought into the cylindrical chamber (2) by the above tube and comprising a number of apertures (9), in the cylindrical chamber (2), above the zone traversed by the analysing beam (R-R), communicating with a source of compressed gas for injecting into the chamber (2) an equivalent number of jets of gas (The figure 1 is referred to).

Fig. 1

## Observation chamber for a powdered material

The present invention concerns an observation chamber for a powdered material.

Known observation chambers of powdered material such as powdered minerals or ground food products, comprise a device for introducing inside a chamber a flow of powdered material (hereinafter simply called material) and a passage through which a beam, such as a ray of light or a laser beam, can traverse the flow of material inside the chamber. It is also known that the ray or beam strikes the granules of material to enable information to be gained about the characteristics of that particular batch of material. The conventional name of analysing beam will be used in this case. The device causing the material to flow into the chamber generally comprises a tube which, on entering the chamber, is coaxial with it and down which material is conveyed by pressure from compressed gas; near the point where the tube enters the chamber, said tube forms a right-angled bend and near the bend a compressed gas ejector imparts to the material energy sufficient to make it flow into the chamber in a way suitable for analysis. The ejector is coaxial with the length of straight duct entering the chamber.

The main drawbacks to present observation chambers are that the material adheres to the inside of the tube and of the chamber, and that the flow of material in that area of the chamber crossed by the beam is not suitably homogeneous and uniform over a period of time.

The observation chamber according to this present invention comprises a cylindrical chamber whose purpose is to contain and guide a flow of powdered material put in for analysis, a tube that passes rectilinearly through the top wall of the cylindrical chamber extending into said chamber parallel to its longitudinal axis and carrying into it a flow of powdered material conveyed by compressed gas, a number of compressed gas ejectors placed around the above tube and having outlets into the cylindrical chamber set back in relation to the outlet of the tube inside the cylindrical chamber in such a way that the compressed gas carried by the ejectors enters upstream of the entry point of the material brought into the cylindrical chamber by the above tube.

The observation chamber according to this present invention also comprises a number of apertures, on one or more circumferences above the zone traversed by the analysing beam, communicating with a source of compressed gas for injecting into the chamber an equivalent number of jets of gas so that the material mixes better with the gas.

The main advantages of the observation chamber according to this present invention consist of the fact that material is prevented from settling inside the tube and inside the chamber, and that the mixture of gas and material is homogeneous and uniform over a period of time in that area of the chamber traversed by the beam.

One way of constructing the invention is described in detail here below, as an example, with reference to the attached drawings in which:

Fig.1 is a partly cut through side view of an observation chamber suitable for observation of the granules composing a batch of coal dust,

Fig.2 is a cross section view of Fig. 1 cut at X-X,

Fig.3 is a view, similar to that in Fig.2, showing an alternative to the single ejectors.

0144018

Figs 1 and 2 show that the observation chamber 1 comprises a vertical cylindrical chamber 2 fixed to a support 3 and a tube 4 a certain length of which penetrates into the upper part of the cylindrical chamber 2 so that coal dust conveyed by compressed air can flow into it. The length of tube 4 that penetrates into the cylindrical chamber 2 is rectilinear and the axis of this part of the tube coincides with the axis A-A of the cylindrical chamber 2. Around tube 4 and above support 3 there is a chamber 5 from whose bottom wall a number of ejectors 6 project downwards and open into the cylindrical chamber 2 all round the piece of tube 4 comprised in the cylindrical chamber 2. Only two of these ejectors are seen in Fig. 1 in order to keep the drawing clear, while in Fig. 2 the full number of eight ejectors are visible. The ejectors 6 open into the cylindrical chamber 2 through the upper circular wall of the cylindrical chamber 2. A tube 7 carrying compressed air enters the chamber 5. A chamber 8 is placed round the lower end of the cylindrical chamber 2 and that part of the cylindrical chamber 2 comprised in chamber 8 contains a number of holes 9 by means of which chamber 8 communicates with the inside of the cylindrical chamber 2. A tube 10 carrying compressed air leads into chamber 8. At its lower end the cylindrical chamber 2 fits into a tube 11 having two opposite apertures 12 through which an analysing beam R-R passes. The analysed material is drawn into the tube 11 in the direction indicated by the arrow F by an aspirator, not shown, and from there enters a container.

In Fig.3, instead of the single ejectors, there is a continuous circular opening 13 through which compressed gas enters chamber 5 in the upper part of cylindrical chamber 2. The opening 13 is the lower end of two concentric cylindrical walls which between them form a cylindrical cavity through which chamber 5 communicates with cylindrical chamber 2.

Claims:

1. Observation chamber for powdered material comprising a cylindrical chamber (2) which contains and guides a flow of powdered material to be analysed by an analysing beam (R-R), means (4) for introducing the powdered material driven by compressed gas and means (6) for injecting compressed gas characterized in that it comprises a tube (4) that penetrates rectilinearly the top wall of the cylindrical chamber (2) extending downwards into the latter parallel with its longitudinal axis and carrying a stream of powdered material, means (6) having outlets opening into the cylindrical chamber (2) set back in relation to the outlet of tube (4) in the cylindrical chamber (2) in such a way that the compressed gas conveyed by the above means (6) enters upstream of the point where the powdered material flows into the cylindrical chamber (2) through the above tube (4) and in that it comprises a number of openings (9) at one or more circumferences of the cylindrical chamber (2) above the zone traversed by the analysing beam (R-R) communicating with a source of compressed gas to be injected into the cylindrical chamber (2) in several jets of gas.

2. Observation chamber according to claim 1 characterized in that the means for injecting compressed gas placed round the above tube (4) consist of a number of single compressed gas ejectors (6).

3. Observation chamber according to claim 1 characterized in that the means for injecting compressed gas placed round the above tube (4) consists of a continuous opening (13).

4. Observation chamber according to claims 1 to 3 characterized in that the means (6) for injecting compressed gas placed round the above tube (4) communicate with a chamber (5) situated round the above tube (4), said chamber receiving compressed gas from another first tube (7).

5. Observation chamber according to claims 1 to 3 characterized in that the series of openings (9) in one or more circumferences of the cylindrical chamber (2) above the zone traversed by the analysing beam (R-R) is comprised in a chamber (8) situated round the cylindrical chamber (2) and receiving compressed gas from another second tube (10).

0144018

_Fig. 1_

powdered coal + compressed air

_Fig. 2_

compressed air

9 compressed air

_Fig. 3_